# EUROPEAN PATENT APPLICATION

(11) **EP 1 424 805 A1**
(43) Date of publication of application: **02.06.2004**
(21) Application number: 02026455.2
(22) Date of filing: 27.11.2002
(51) Int. Cl.: H04L 9/32

(54) **Device and method for checking manipulation of an oscillator**

(71) Applicant: SCM Microsystems GmbH, 85737 Ismaning (DE)
(72) Inventor: Sengers, Tom, 6662 TR Elst (NL); Derks, Alexander, 5345 RR Oss (NL)
(74) Representative: Degwert, Hartmut, Dipl.-Phys.

(57) **Abstract**

The invention relates to a device for checking whether an oscillator has been manipulated, including a housing (100) accommodating a first oscillator (101) generating a first oscillating signal having a predefined first frequency, a second oscillator (102) generating a second oscillating signal having a predefined second frequency and a comparator (109) connected to the first oscillator (101) and to the second oscillator (102), the comparator being configured so that it is able to check by way of the second frequency whether the first frequency is in a predefined range and outputting a check signal OUT indicating whether the first frequency is in a predefined range or not. The invention relates furthermore to a method for checking whether an oscillator has been manipulated. The device in accordance with the invention may be used e.g. in a chip card reader or a system for time-synchronized authentication.

## Description

The invention relates to a device and a method for checking whether an oscillator has been manipulated.

Cryptographic systems as put to use nowadays e.g. for money transactions in which secret information (such as keys or passwords) can be communicated from the chip card to the chip card reader only in a specific time range, whereby the timing information relative to the permissible communication time is communicated via the clock signal furnished by the microprocessor to the chip card before the sensitive data can be communicated from the chip card to the chip card reader, suffer from substantial security deficiencies.

These cryptographic systems as described above namely can be manipulated by e.g. applying a variable clock frequency to the common interface between the chip card and its reader in an attempt to artificially generate at points in time in the future at which communication is allowed and to communicate this information to the chip card so that secret information can then be communicated therefrom to the interface at which the information can then be intercepted.

Similar security problems are encountered e.g. also in access systems, e.g. access systems using a password, working by the method of time-synchronous authentification. In this arrangement, for instance in a time-based certifier for gaining access to a secure data content held in a server connected to the certifier, after the user has input a user name and password, a first pseudo-random number is formed from an actual timing information generated in the certifier by means of a clock controlled by an oscillator and a starting value in accordance with a specific convention, i.e. at the actual point in time at which a user attempts to log on in the server. Via the interface between the server and the certifier the pseudo-random number together with the user name and password are communicated to the server which then likewise generates a pseudo-random number in accordance with the same convention and from the same starting value as well as with the same timing information generated by a further clock in the server controlled by an oscillator therein and which is precisely synchronized in time with the clock in the certifier. The two pseudo-random numbers are then compared to each other and the user only receives access to the secure data content when both pseudo-random numbers tally. Even with such highly-sensitive access systems permitting logging on into the secure data area only within a narrow time range, an attempt can still be made, e.g. by connecting a frequency generator instead of the oscillator in the certifier or the oscillator in the server to generate ''virtual'' points in time in the future to thus gain unauthorized access to the secure data content. The certifier may be included in a PC.

The objective of the present invention is thus to render such misuse of the aforementioned devices more difficult.

The objective of the invention is achieved by a device for checking whether an oscillator has been manipulated, including a housing accommodating a first oscillator generating a first oscillating signal having a predefined first frequency, a second oscillator generating a second oscillating signal having a predefined second frequency and a comparator directly or indirectly connected to the first oscillator and to the second oscillator, the comparator being configured so that it is able to check by way of the second frequency whether the first frequency is in a predefined range and outputting a signal indicating whether the first frequency is in a predefined range or not.

In addition the objective of the invention is achieved by a method for checking whether an oscillator has been manipulated as set forth in claim 8.

Advantageous further embodiments of the invention are characterized in the sub-claims.

The invention will now be detailled by way of example with reference to the drawing in which:
Fig. 1 is a diagrammatic representation of one embodiment of a device in accordance with the invention for checking manipulation of an oscillator,
Fig. 2 is a diagrammatic representation of a system in accordance with the invention for time-synchronized authentication serving to permit user access to a secure data content and which comprises two devices in accordance with the invention as shown in Fig. 1, and
Fig. 3 is a diagrammatic representation of a chip card reader in accordance with the invention and a chip card.

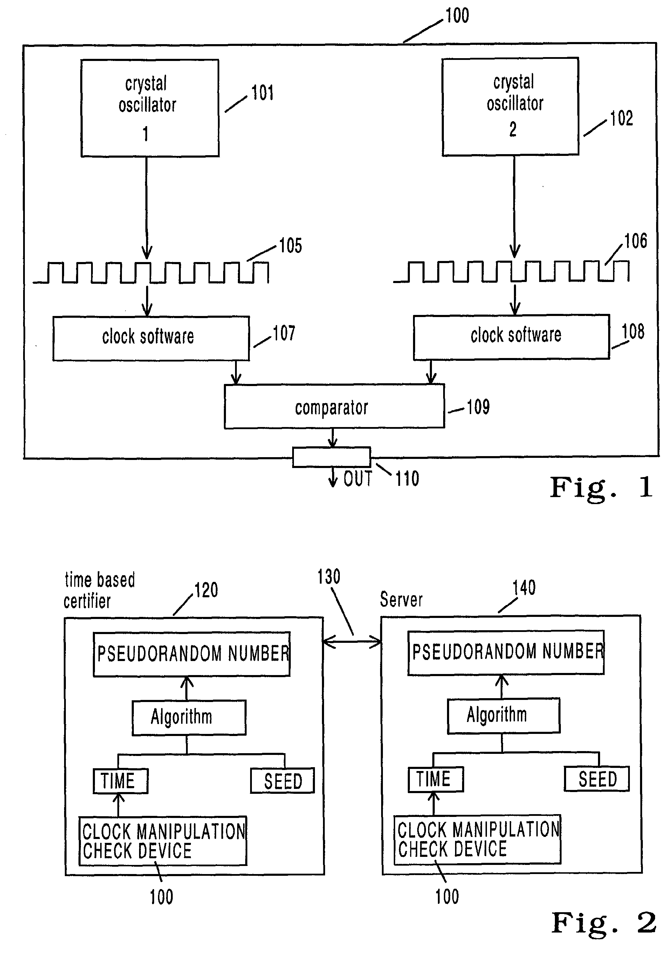

Referring now to Fig. 1 there is illustrated a diagrammatic representation of one embodiment of a device in accordance with the invention for checking whether an oscillator has been manipulated.

The device comprises a housing 100 in which a first crystal oscillator 101 to be checked whether a manipulation has taken place or not is arranged. For security reasons the housing is configured preferably so that access from without is not possible and it may be made of metal or of a rugged plastics material, for example. The oscillating signal 105 as generated by the first crystal oscillator 101 has a first predefined frequency and is supplied to a first counter 107.

Accommodated in addition in the housing 100 is a second crystal oscillator 102 which may also be termed a reference oscillator. The oscillating signal 106 generated by the second crystal oscillator 102 may, but must not necessarily, comprise the same wanted frequency as the oscillating signal generated by the first crystal oscillator 101. This second oscillating signal is supplied to a second counter 108.

Accommodated in addition in the housing 100 is a microprocessor (not shown in Fig. 1) including a memory for handling the commands of the counters 107 and 108. The microprocessor comprises in addition in software form instructions for implementing a comparison between the frequency of the oscillating signal furnished by the first crystal oscillator 101 and the frequency of the oscillating signal furnished by the second crystal oscillator 102 as represented by the clock comparator 109 in Fig. 1. The microprocessor then compares the frequency of the two oscillating signals 105 and 106 and outputs at the output 110 a checking signal OUT indicating whether the frequency of the first oscillating signal is within a predefined range. The checking signal OUT may simply involve forwarding the signal of the first crystal oscillator 101 via the outputs to a further device connected to the device when the frequency of the oscillating signal of the first crystal oscillator 101 is in the predefined range and not forwarding the signal of the first crystal oscillator 101 via the outputs to a further device connected to the device when the frequency of the oscillating signal of the first crystal oscillator 101 is not in the predefined range. The frequency of the first oscillating signal may not be in the predefined range e.g. when the first crystal oscillator 101 has been intentionally manipulated by it being replaced e.g. by a frequency generator.

The clock comparator 109 as shown in Fig. 1 must not necessarily involve a microprocessor having corresponding software, it may also consist of a suitable hardware logic circuit, for example.

The clock comparator can for example check the frequency periodically, e.g. every 5 seconds.

Referring now to Fig. 2 there is illustrated a system for time-synchronized authentication serving to permit user access to a secure data content and which comprises the device as described above in accordance with the invention for checking whether an oscillator has been manipulated.

This system comprises a time-based certifier device 120 in the housing of which a clock manipulation check device 150 is accommodated which may be configured the same as the device as described above and as shown in Fig. 1. The certifier device 120 comprises an interface (not shown in Fig. 2) to a user which may comprise a display and a keyboard. The time-based certifier device 120 including a microprocessor with a memory is connected via a data communication or human interface 130 to a server computer 140 likewise including a microprocessor with memory. In the memory of the server 140 a secure data content is to be memorized for access only by authorized users. The time-based certifier 120 can for example be a part of a PC or of a voice response application.

When a user then wishes to gain access via the time-based certifier 120 to the secure data content held in the server 140, he first enters his user name via the keyboard of the time-based certifier device 120 and a password allocated to him which is also held in the memory of the server 140 assigned to the corresponding user name. The clock manipulation check device 100 arranged in the time-based certifier device 120 and configured as shown in Fig. 1 checks - continuously every 5 seconds - whether the frequency of the oscillating signal originating in the first crystal oscillator 101 is within a predefined range. If so, it can be assumed that the first crystal oscillator 101 has not been manipulated and in a timer comprising the clock manipulation checking device a timing data is formed from the oscillating signal by ways and means known from prior art with the aid of the oscillating signal, this time representing the actual time. Preferably the timer is a software timer.

The time-based certifier device 120 also includes, likewise as a software item, a pseudo-random number generator means with which a pseudo-random number can be formed from the actual timing information and a starting date, termed seed. The "seed" can also be a value which characterizes the certifier device; i.e. each device has its own special value. The seed can also be an ID-value. In this arrangement, use is made of a predefined algorithm with the aid of which the pseudo-random number is computed from the actual timing information and the seed, both of which are the parameters of the function executed by the pseudo-random number generator means.

Once a pseudo-random number assigned to the actual timing information has been formed in the time-based certifier device 120 it is sent together with the user name and password entered by the user via the communication interface 130 to the server 140 where it is first memorized together with the user name and password in the memory of the server 140. In a different solution the pseudo random number could be read be the user on a display and then typed into a computer.

The server 140 includes a timer configured the same as the timer in the time-based certifier device 120 and likewise a clock manipulation check device 160 the same as already described above in conjunction with Fig. 1. With the aid of the clock manipulation check device 160 of the server 140 continuously a check is made to see whether the frequency of the oscillating signal output by the first oscillator of the clock manipulation check device is within a predefined established range. If so, the timing data formed by the timer of the server 140 together with a seed is used, the same as described above for the time-based certifier device 120, to form the pseudo-random number. For this purpose the server uses the same algorithm as the time-based certifier device 120 on the basis of the same seed. In addition, the timer of the time-based certifier device 120 and the timer of the server 140 are strictly time synchronized so that both timers also indicate the same actual point in time (thus the name "time-synchronized authentication system").

The system as shown in Fig. 2 may also be devised, e.g. to generate a new pseudo-random number at regular intervals in time, e.g. every minute both in the time-based certifier device 120 and in the server 140.

In the microprocessor of the server 140 the pseudo-random number formed in the time-based certifier device 120 and communicated to the server 140 together with the user name and password is compared to the pseudo-random number formed in the server 140 itself In addition, the password held in the server 140 for the user is compared to the password communicated by the time-based certifier device 120 to the server 140. When the two pseudo-random numbers and the passwords tally, the user is granted access to the data content held in the server as indicated e.g. by an access signal communicated via the communication interface 130 from the server 140 to the time-based certifier device 120 and displayed to the user on the monitor of the time-based certifier device 120.

The person skilled in the art will readily appreciate that the clock manipulation check device in accordance with the invention in conjunction with the time-synchronized authentication systems constitutes a substantial improvement since any timer manipulation can now be instantly detected.

If, namely, one of the clock manipulation check devices in the time-based certifier device 120 or in the server 140 indicates that the frequency is not within the predefined range, a signal is output, indicating to the user that access to the secure data content in the server is disallowed.

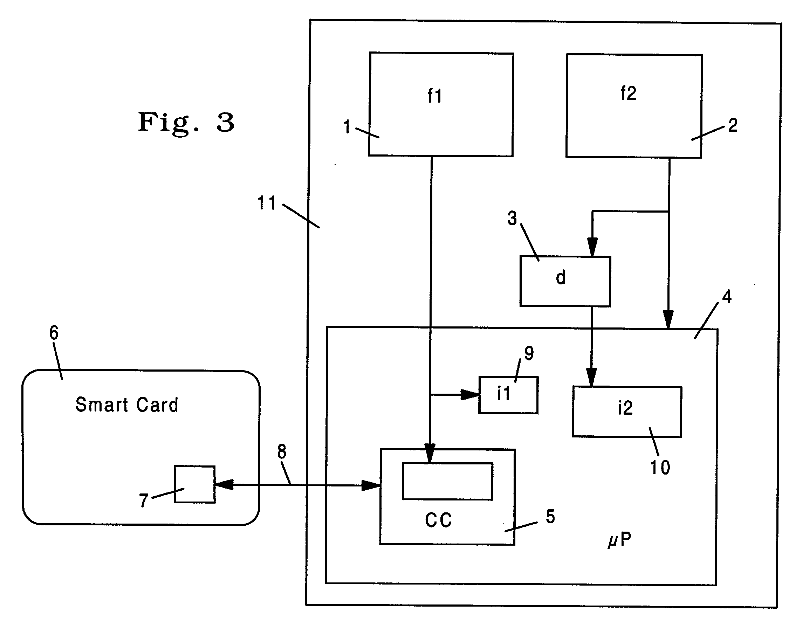

Referring now to Fig. 3 there is illustrated a chip card reader 11 in accordance with the invention comprising a microprocessor 4 including a memory (not shown) in which, among other things, programs are stored as needed for communication between a chip card 6 and the chip card reader 11 as well as for data processing.

The chip card reader 11 may comprise a chute (not shown in Fig. 3) for a chip card 6 identified in Fig. 3 as SmartCard and comprising a contact patch 7 via which the contact to the chip card reader 11 can be produced when the chip card 6 is inserted into the chip card reader. Furthermore, the chip card reader 11 comprises an interface 5 (CC) permitting the exchange of data between the chip card 6 and the chip card reader 11.

Provided in the chip card reader 11 is a first clock generator (f1) 1 connected to the interface 5 and generating ideally a clock frequency f1 suitable for timing the data communication between the chip card 6 and the chip card reader 11 as required. The clock frequency f1 may be of the order of 32 kHz as used currently in chip cards.

The chip card reader 11 comprises in addition a second clock generator (f2) 2 which operates independently of the first clock generator 1 and generates a second clock frequency f2 which in the present example is required to be of the order of 4.9 MHz in forming the system clock of the microprocessor 4. The frequency is divided by a frequency divider 3 e.g. by a factor housing 100 and is then available as the 49 kHz frequency f3 likewise in an order of magnitude suitable for comparison with the frequency f1. Thus, even if the frequency generator generating the 4.9 MHz is relatively inaccurate, dividing the frequency reduces the error so that it is so small that a comparison with the frequency f1 of the, as a rule more accurate, clock generator 1 is possible.

Both clock generators 1 and 2 are preferably quartz crystal generators.

The function of the chip card reader in accordance with the invention is as follows:

The clock signal generated by the first clock generator 1 produces in regular time intervals an interrupt signal 9 (i1) which is output to the microprocessor. Likewise, the clock signal f3 generated via the frequency divider data in the second clock generator 2 produces in regular time intervals an interrupt signal 10 (i2) which is output to the microprocessor. Both interrupt signals may activate e.g. software timers in the microprocessor with the aid of which it can then be checked whether the first frequency f1 is in a permissible frequency interval or has a permissible frequency value permitting and/or enabling data communication between the chip card 6 and the chip card reader 11.

The communication with the chip card as controlled with the aid of the program saved in the memory of the microprocessor and the communication protocol between the chip card and chip card reader is then organized so that prior to communication of any sensitive data (such as digital access keys or passwords) from the chip card 6 to the chip card reader 11 by the microprocessor 4 and software timers on the basis of the frequency f3 furnished by the second clock generator 2 a check is made as to whether the frequency f1 generated for controlling communication via the interface is in a permissible range as admissible for data exchange between the chip card 6 and the chip card reader 11.

In this arrangement, a control signal is output by the microprocessor 4 via the interface to the chip card, as a result of which the data communication between the chip card and the chip card reader is enabled or disabled, depending on whether the first clock frequency f1 is in the permissible interval or not.

In the present example, if the first clock frequency f1 is not in the 32 kHz range, data communication between the chip card 6 and the microprocessor 4 via the interface 5 would be prevented.

The present invention is particularly suitable for use in cryptographic systems in which secret information (such as keys or passwords) can be communicated from the chip card to the chip card reader only in a specific time range. In this arrangement, the timing information relative to the permissible communication time is communicated via the clock signal furnished by the microprocessor to the chip card before the sensitive data can be communicated from the chip card to the chip card reader. In the past, such systems could be manipulated by e.g. applying a variable clock frequency f1 to the communication interface in an attempt to artifically generate at points in time in the future at which communication is allowed and to communicate this information to the chip card so that secret information can then be communicated therefrom to the interface at which the information could then be intercepted. Such misuse of chip card/chip card reader systems is now rendered impossible or at least made significantly more difficult by the present invention.

In an alternative embodiment of the invention the chip card reader may also be configured so that with the aid of the software timers the second clock frequency f2 can be checked on the basis of the first clock frequency f1 by analog ways and means as to whether it is within the range suitable for operating the microprocessor (system clock).

Preferably the invention may then also be configured so that checking the first frequency f1 and/or second frequency f2 can be done continuously at regular time intervals.

The microprocessor of the chip card reader comprises preferably a real time clock with which the timing information can be generated for defining the permissible time range.

In another embodiment the chip card reader as described may also be connected to a device as described above or a system for time-synchronized authentication. It is thus conceivable e.g. to connect the chip card reader via an interface to a PC including a time-base certifier, whereby the portion of the system for time-synchronized authentication as shown in Fig. 2 arranged in the time-based certifier device is provided in the chip card reader. The password and the user name of a user requiring access to a secure data content via the chip card reader as held in a server connected to the PC can be memorized e.g. on the chip card and communicated to the server from the chip card via the chip card reader and PC. In this case, the device for checking manipulation of the first crystal oscillator 101 arranged in the chip card reader could assume a dual function by, for one thing, checking whether the communication frequency as allowed for data communication from the chip card is in an allowed range, and, for another, checking the timer or the signal frequency output by the oscillator thereof which may be the same at the first oscillator, but not necessarily so. This timer arranged in the chip card reader would then be part of the sub-system arranged in the chip card reader for time-synchronized authentication. The other part of the system for time-synchronized authentication would then be arranged in the server as shown in Fig. 2 and as described above. However, in this case in the chip card reader but also in addition to the second crystal oscillator 102 only a sole first crystal oscillator 101 may be provided for determining both the frequency for the data content to and from the chip card as well as the frequency salient for function of the timer from which the actual timing information needed to determine the pseudo-random number is derived. In an alternative embodiment instead of the first crystal oscillator 101 two oscillators may be arranged in the chip card reader, one of which is responsible for the data content frequency and the other for the timer function. In yet another alternative embodiment instead of the first crystal oscillator 101 an oscillator and one or more frequency dividers may be provided.

## Claims

1. A device for checking whether an oscillator has been manipulated including a housing accommodating a first oscillator (101) generating a first oscillating signal having a predefined first frequency, a second oscillator (102) generating a second oscillating signal having a predefined second frequency and a comparator (109) directly or indirectly connected to said first oscillator and to said second oscillator, said comparator being configured so that it is able to check by way of said second frequency whether said first frequency is in a predefined range and outputting a signal indicating whether said first frequency is in a predefined range or not.

2. A device for time-synchronized authentication of a user comprising a device as set forth in claim 1.

3. The device as set forth in claim 2 further comprising a timer capable of generating by means of said first frequency a timing information and a pseudo-random number generator means configured to form a pseudo-random number with the aid of said actual timing information.

4. The device as set forth in claim 3 wherein said pseudo-random number generator means is further configured to form said pseudo-random number in accordance with a specified convention from said actual timing information and a seed.

5. The device as set forth in any of the claims 1 to 4 wherein said comparator is configured to permit checking, by way of said first clock frequency, whether said second clock frequency is within an allowed range.

6. A system for time-synchronized authentication serving to permit user access to a secure data content comprising a first device as set forth in claim 4 including in addition an interface to said user, a second device as set forth in claim 4 including a communication interface to said first device and comprising a secure data content, said timers of said two devices being synchronized in time, said pseudo-random number generator means of both devices comprising said same seed, said pseudo-random number being formed in accordance with the same convention and at the same point in time, and wherein in addition in said second device a checking means is provided which compares a pseudo-random number, generated by said first device and communicated via said communication interface to said second device, to said corresponding pseudo-random number generated in said second device and enables user access to said secure data content only when said two pseudo-random numbers tally.

7. The system as set forth in claim 6 wherein said first device is integrated in a PC and said second device in a server.

8. A method for checking whether an oscillator has been manipulated comprising the steps: generating a first oscillating signal having a predefined first frequency by means of a first oscillator accommodated in a housing of a device, generating a second oscillating signal having a predefined second frequency by means of a second oscillator accommodated in said housing of said device, checking said first oscillating signal by way of said second oscillating signal whether said first frequency is within a predefined range and generating a check signal indicating whether said first frequency is within a predefined range or not.

9. A method for time-synchronized authentication serving to permit user access to a secure data content and comprising a method as set forth in claim 8.

10. The method for time-synchronized authentication as set forth in claim 9 wherein, in addition, by means of said first frequency a timing information and with the aid of said actual timing information a pseudo-random number is generated.

11. The method for time-synchronized authentication as set forth in claim 10 wherein said pseudo-random number is formed in accordance with a specified convention from said actual timing information and a seed.

12. The method as set forth in claim 11 wherein a pseudo-random number is formed in accordance with the method as set forth in claim 11 by the same convention and with the same seed in a first device including a user interface when a user requires access to a secure data content held in a second device connected to said first device via a communication interface in said first device and second device in each case, whereby said timing information generated in said two devices is synchronized, one of said two pseudo-random numbers is sent via said communication interface to the other device in each case where it is compared to said pseudo-random number generated in this device and enabling access by the user to said secure data content when said two pseudo-random numbers tally.

13. A chip card reader including a device as set forth in claim 1 wherein said housing is the housing of said chip card reader.

14. The chip card reader as set forth in claim 13 comprising, in addition, an interface via which data can be exchanged with a chip card, wherein said first frequency dictates the timing in communicating data between said chip card and said chip card reader via said interface, said predefined range of said first frequency is the range in which data communication from said chip card to said chip card reader is permitted, and said signal enabling or disabling data communication between said chip card and said chip card reader is output via said interface to said chip card depending on whether said first frequency is within said predefined range or not.

15. The chip card reader as set forth in claim 13 or 14 comprising a microprocessor.

16. The chip card reader as set forth in any of the claims 13 to 15 wherein said second frequency is derived from an oscillator which furnishes the system clock of said microprocessor.

17. The chip card reader as set forth in any of the preceding claims 13 to 16 wherein said first frequency is approx. 32 kHz.

18. The chip card reader as set forth in any of the preceding claims 13 to 17 wherein a frequency divider is additionally provided.

19. The chip card reader as set forth in any of the preceding claims 15 to 18 comprising, in addition, software timers in said microprocessor.

20. The chip card reader as set forth in claim 19 configured in addition so that interrupt signals are furnished at regular intervals in time from said two oscillators configured as clock generators to said microprocessor which activate software timers in establishing whether said first frequency is within said predefined range by comparing said signals of said microprocessor furnished by said two software timers.

21. The chip card reader as set forth in any of the preceding claims 13 to 20 comprising, in addition, a device or a system for time-synchronized authentication as set forth in any of the claims 2 to 6.

22. The method as set forth in claim 8 for secure data exchange between a chip card and a chip card reader in which said housing is the housing of said chip card reader, comprising the steps: generating a first clock frequency dictating the timing in communicating data between said chip card and said chip card reader via said interface between said chip card and said chip card reader, outputting a check signal prior to data communication from said chip card to said chip card reader via said interface for enabling or disabling data communication between said chip card and chip card reader depending on whether or not said first frequency is within said permissible range.
